# EUROPEAN PATENT APPLICATION

(11) **EP 4 600 224 A1**
(43) Date of publication of application: **13.08.2025**
(21) Application number: 25153395.6
(22) Date of filing: 22.01.2025
(51) Int. Cl.: C02F 9/00, H01M 4/02, H01M 10/00, C02F 1/66, C02F 1/52, C02F 1/00

(54) **METHOD FOR PREPARING LITHIUM CARBONATE, LITHIUM CARBONATE PREPARED USING THE SAME, AND RECHARGEABLE LITHIUM BATTERY INCLUDING POSITIVE ELECTRODE ACTIVE MATERIAL PREPARED USING THE SAME**

(30) Priority: 08.02.2024 KR 20240019935; 25.10.2024 KR 20240147149
(71) Applicant: SAMSUNG SDI CO., LTD., Yongin-si, Gyeonggi-do 17084 (KR)
(72) Inventor: OH, Eunok, Yongin-si (KR); PARK, Kieun, Yongin-si (KR)
(74) Representative: Marks & Clerk LLP

(57) **Abstract**

Provided are a method for preparing a lithium carbonate, a lithium carbonate prepared using the same, and a rechargeable lithium battery including a positive electrode active material prepared using the same, and more particularly, to a method for preparing a lithium carbonate, including mixing a lithium nickel-based composite oxide and a coating solution to form a first mixture where the coating solution includes a coating raw material, a precipitant, and a solvent, filtering the first mixture to recover a washing solution containing at least 1000 ppm of lithium, filtering the washing solution, mixing and heating the filtered washing solution and sodium carbonate to form a second mixture, and filtering, washing, and drying the second mixture, wherein the heating is performed at a temperature of about 50 °C to about 80 °C.

## Description

### BACKGROUND

The present disclosure relates to a method for preparing a lithium carbonate, a lithium carbonate prepared using the same, and a rechargeable lithium battery including a positive electrode active material prepared using the same.

Rechargeable lithium batteries are utilized as energy storage and supply sources in a broad range of applications. From portable devices such as smartphones, tablets, wearables, laptops, digital cameras, and power tools to transportation such as hybrid cars, electric vehicles, and electric boards, these rechargeable lithium batteries are widely used as energy storage and supply sources. Now, the usage thereof is extending to future industries such as drones, robots, and Urban Air Mobility (UAM).

In particular, an awareness of climate change and an increasing interest in eco-friendliness have driven significant growth in the electric vehicle market, resulting in a sharp rise in the use of rechargeable lithium batteries. However, as the essential raw materials for manufacturing rechargeable lithium batteries are sourced from natural resources, their extraction inevitably leads to environmental damage and pollution. Consequently, there is a pressing need to develop technology for recycling raw materials.

Accordingly, methods for recovering valuable metals such as transition metal precursors and lithium precursors from waste rechargeable lithium batteries and waste related to rechargeable lithium batteries including waste generated from a rechargeable lithium battery manufacturing process and wastewater generated from a positive electrode active material washing process are drawing attention. These recovered valuable metals may be reused for the manufacturing of rechargeable lithium batteries, and research and development are actively underway to develop recycling methods that are more environmentally friendly, less costly, and capable of recovering high concentrations of valuable metals.

There are already various methods in place to recover valuable metals from waste rechargeable lithium batteries or waste generated from a rechargeable lithium battery manufacturing process. However, the typical methods require the use of large amounts of basic solutions during the recovery process. Considering that byproducts of basic solutions contribute to environmental pollution, there is a need to develop alternatives to basic solutions.

There are also various methods in place to recover lithium precursors from wastewater from a positive electrode active material washing process. The wastewater from the washing of a positive electrode active material contains a substantial amount of lithium. However, the typical methods require a separate, independent process to recover lithium precursors from the wastewater. In addition, given that no process achieves 100% recovery, adding the separate, independent process necessarily entails lithium losses. Thus, an enhanced method for recovering lithium precursors is needed.

### SUMMARY

The present disclosure provides a rechargeable lithium battery exhibiting excellent high-temperature lifespan characteristics, and a lithium carbonate for preparing a positive electrode active material included in the rechargeable lithium battery, and a method for preparing the same.

An embodiment of the present invention provides a method for preparing a lithium carbonate, including mixing a lithium nickel-based composite oxide and a coating solution to form a first mixture where the coating solution includes a coating raw material, a precipitant, and a solvent, filtering the first mixture to recover a washing solution containing at least 1000 ppm of lithium, filtering the washing solution, mixing and heating the filtered washing solution and sodium carbonate to form a second mixture, and filtering, washing, and drying the second mixture, wherein the heating is performed at a temperature of about 50 °C to about 80 °C.

In an embodiment of the present invention, a lithium carbonate is prepared through the above-described preparation method and has a plate shape.

In an embodiment of the present invention, a rechargeable lithium battery includes a positive electrode active material prepared by mixing and heat treating the lithium carbonate described above and a transition metal-containing compound.

An embodiment of the present invention provides a method for preparing a lithium carbonate, including mixing a lithium nickel-based composite oxide and a coating solution to form a first mixture where the coating solution includes a coating raw material, a precipitant, and a solvent, filtering the first mixture to recover a washing solution containing at least 1000 ppm of lithium, mixing and heating the washing solution and sodium carbonate to form a second mixture, and filtering, washing, and drying the second mixture, wherein the heating is performed at a temperature of about 50 °C to about 80 °C.

At least some of the above and other features of the invention are set out in the claims.

### BRIEF DESCRIPTION OF THE FIGURES

The accompanying drawings are included to provide a further understanding of the present invention, and are incorporated in and constitute a part of this specification. The drawings illustrate embodiments of the present invention and, together with the description, serve to explain principles of the present invention. In the drawings:
FIG. 1 is a simplified conceptual view showing a rechargeable lithium battery according to embodiments of the present invention;
FIGS. 2 to 5 are schematic views showing a rechargeable lithium battery according to an embodiment, and FIG. 2 shows a cylindrical battery, FIG. 3 shows a prismatic battery, and FIGS. 4 and 5 show pouch type batteries;
FIG. 6 is a schematic view for schematically describing a lithium carbonate according to embodiments of the present invention;
FIG. 7 is an XRD spectrum of a lithium carbonate according to embodiments of the present invention;
FIG. 8 is a flowchart for describing a method for preparing a lithium carbonate (S10) according to embodiments of the present invention;
FIGS. 9 to 12 are schematic views for schematically describing each step in the method for preparing a lithium carbonate;
FIG. 13 is a schematic view for schematically describing a lithium carbonate according to a Comparative Example of the present invention;
FIG. 14 is a flowchart for describing a method for preparing a positive electrode active material according to embodiments of the present invention;
FIG. 15 is a flowchart for describing an embodiment of step S70 in FIG. 14;
FIG. 16 is a cross-sectional view for describing a positive electrode active material according to embodiments of the present invention;
FIG. 17 is an electron scanning microscope image of a lithium carbonate from Example 1;
FIG. 18 is an electron scanning microscope image of a lithium carbonate from Comparative Example 1;
FIG. 19 is an XRD spectrum result of a lithium carbonate from Example 1 and Comparative Example 1; and
FIG. 20 is a graph showing high-temperature lifespan characteristics of rechargeable lithium batteries including Example 1 and Comparative Example 1.

### DETAILED DESCRIPTION

In order to sufficiently understand the configuration and effects of the present invention, preferred embodiments of the present invention will be described with reference to the accompanying drawings. It should be noted, however, that the present invention is not limited to the following embodiments, and may be implemented in various forms and variously modified. The embodiments herein are provided so that the present invention will be thorough and complete and will fully convey the scope of the present invention to those skilled in the art.

Herein, it will be understood that when a component is referred to as being on another component, the component may be directly on another component, or an intervening third component may be present. In addition, in the drawings, thicknesses of components are exaggerated for effectively describing technical contents. Like reference numerals refer to like elements throughout.

The embodiments described herein will be explained with reference to the cross-sectional views and/or plan views as ideal example views of the present invention. In the drawings, the thicknesses of films and regions are exaggerated for effective description of the technical contents. Thus, regions presented as an example in the drawings have general properties, and shapes of the exemplified areas are used to illustrate a specific shape of a device region. Therefore, this should not be construed as limited to the scope of the present invention. Although the terms such as first, second, and third are used to describe various components in various embodiments herein, the components should not be limited to these terms. These terms are used only to distinguish one component from another component. Embodiments described and exemplified herein include complementary embodiments thereof.

Terms used herein are not for limiting the present invention but for describing the embodiments. As used herein, the singular forms include the plural forms as well, unless the context clearly indicates otherwise. The meaning of 'comprises' and/or 'comprising' used herein does not exclude the presence or addition of one or more other components besides a mentioned component.

As used herein, the term "combination thereof' may refer to a mixture, a stack, a composite, a copolymer, an alloy, a blend, or a reaction product.

Unless otherwise defined herein, a particle diameter may be an average particle diameter. In addition, a particle diameter is defined as an average particle diameter (D50) indicating the diameter of particles having a cumulative volume of 50 volume% in the particle size distribution. The average particle diameter (D50) may be measured by a method widely known to those skilled in the art, for example, by a particle size analyzer, an image of transmission electron microscope (TEM), or an image of scanning electron microscope (SEM). Alternatively, an average particle diameter (D50) value may be obtained by measuring a subject using a dynamic light-scattering-based measuring device, performing data analysis, counting the number of particles for each particle size range, and then calculating the value therefrom. Alternatively, the average particle diameter (D50) may be measured using a laser diffraction method. In the measuring using the laser diffraction method, more specifically, target particles are distributed in a distribution solvent, introduced into a commercially available laser diffraction particle diameter measuring device (e.g., MT 3000 available from Microtrac, Ltd.), irradiated with ultrasonic waves of about 28 kHz at a power of 60 W, and then an average particle diameter (D50) based on 50% of the particle diameter distribution in the measuring device may be calculated.

Herein, each of such phrases as "A or B", "at least one of A and B", "at least one of A or B", "A, B, or C", "at least one of A, B, and C", or "at least one of A, B, or C" may include any one of, or all possible combinations of the items enumerated together in a corresponding one of the phrases.

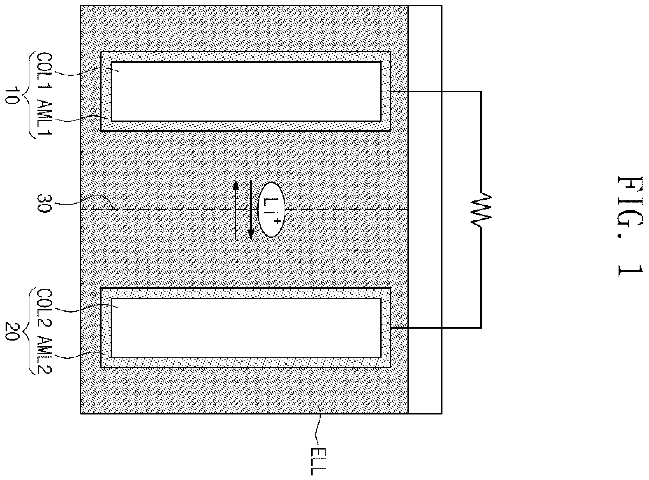

FIG. 1 is a cross-sectional view of a rechargeable lithium battery according to embodiments of the present invention. Referring to FIG. 1, the rechargeable lithium battery may include a positive electrode 10, a negative electrode 20, a separator 30, and an electrolyte solution ELL.

The positive electrode 10 and the negative electrode 20 may be spaced apart from each other by the separator 30. The separator 30 may be disposed between the positive electrode 10 and the negative electrode 20. The positive electrode 10, the negative electrode 20 and the separator 30 may be in contact with the electrolyte solution ELL. The positive electrode 10, the negative electrode 20 and the separator 30 may be impregnated in the electrolyte solution ELL.

The electrolyte solution ELL may be a medium for transferring lithium ions between the positive electrode 10 and the negative electrode 20. In the electrolyte solution ELL, the lithium ions may move through the separator 30 toward the positive electrode 10 or the negative electrode 20.

### Positive Electrode 10

The positive electrode 10 for a rechargeable lithium battery may include a current collector COL1 and a positive electrode active material layer AML1 on the current collector. The positive electrode active material layer AML1 may include a positive electrode active material and may further include a binder and/or a conductive material (e.g., an electrically conductive material).

For example, the positive electrode 10 may further include an additive that can serve as a sacrificial positive electrode.

An amount of the positive electrode active material may be about 90 wt% to about 99.5 wt% based on 100 wt% of the positive electrode active material layer AML1. Amounts of the binder and the conductive material may be about 0.5 wt% to about 5 wt%, respectively, based on 100 wt% of the positive electrode active material layer AML1.

The binder serves to attach the positive electrode active material particles well to each other and also to attach the positive electrode active material well to the current collector COL1. Examples of the binder may include polyvinyl alcohol, carboxymethyl cellulose, hydroxypropyl cellulose, diacetyl cellulose, polyvinylchloride, carboxylated polyvinylchloride, polyvinylfluoride, a polymer including ethylene oxide, polyvinylpyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, a polyester resin, nylon, and the like, as non-limiting examples.

The conductive material may be used to impart conductivity (e.g., electrical conductivity) to the electrode. Any material that does not cause chemical change (e.g., does not cause an undesirable chemical change in the rechargeable lithium battery) and conducts electrons can be used in the battery. Examples of the conductive material may include a carbon-based material such as natural graphite, artificial graphite, carbon black, acetylene black, ketjen black, a carbon fiber, a carbon nanofiber, and carbon nanotubes; a metal-based material containing copper, nickel, aluminium, silver, etc., in a form of a metal powder or a metal fiber; a conductive polymer such as a polyphenylene derivative; or a mixture thereof.

Al may be used as the current collector COL1, but is not limited thereto.

### Positive Electrode Active Material

The positive electrode active material may include a compound (lithiated intercalation compound) that is capable of intercalating and deintercalating lithium. Specifically, at least one of a composite oxide of lithium and a metal selected from cobalt, manganese, nickel, and combinations thereof may be used.

The composite oxide may be a lithium transition metal composite oxide. Specific examples of the composite oxide may include lithium nickel-based oxide, lithium cobalt-based oxide, lithium manganese-based oxide, lithium iron phosphate-based compound, cobalt-free nickel-manganese-based oxide, or a combination thereof.

As an example, the following compounds represented by any one of the following Chemical Formulas may be used. LiₐA_{1-b}X_{b}O_{2-c}D_{c} (0.90≤a≤1.8, 0≤b≤0.5, and 0≤c≤0.05); LiₐMn_{2-b}X_{b}O_{4-c}D_{c} (0.90≤a≤1.8, 0≤b≤0.5, and 0≤c≤0.05); LiₐNi_{1-b-c}Co_{b}X_{c}C_{2-α}D_{α} (0.90≤a≤1.8, 0≤b≤0.5, 0≤c≤0.5, and 0<α<2); LiₐNi_{1-b-c}Mn_{b}X_{c}O_{2-α}D_{α} (0.90≤a≤1.8, 0≤b≤0.5, 0≤c≤0.5, and 0<α<2); LiₐNi_{b}Co_{c}L¹_{d}GₑO₂ (0.90≤a≤1.8, 0≤b≤0.9, 0≤c≤0.5, 0≤d≤0.5, and 0≤e≤0.1); LiₐNiG_{b}O₂ (0.90≤a≤1.8 and 0.001≤b≤0.1); LiₐCoG_{b}O₂ (0.90≤a≤1.8 and 0.001≤b≤0.1); LiₐMn_{1-b}G_{b}O₂ (0.90≤a≤1.8 and 0.001≤b≤0.1); LiₐMn₂G_{b}O₄ (0.90≤a≤1.8 and 0.001≤b≤0.1); LiₐMn_{1-g}G_{g}PO₄ (0.90≤a≤1.8 and 0≤g≤0.5); Li_{(3-f)}Fe₂(PO₄)₃ (0≤f≤2); or LiₐFePO₄ (0.90≤a≤1.8).

In the above Chemical Formulas, A is Ni, Co, Mn, or a combination thereof; X is Al, Ni, Co, Mn, Cr, Fe, Mg, Sr, V, a rare earth element or a combination thereof; D is O, F, S, P, or a combination thereof; G is Al, Cr, Mn, Fe, Mg, La, Ce, Sr, V, or a combination thereof; and L¹ is Mn, Al, or a combination thereof.

The positive electrode active material may be, for example, a high nickel-based positive electrode active material having a nickel content of greater than or equal to about 80 mol%, greater than or equal to about 85 mol%, greater than or equal to about 90 mol%, greater than or equal to about 91 mol%, or greater than or equal to about 94 mol% and less than or equal to about 99 mol% based on 100 mol% of the metal excluding lithium in the lithium transition metal composite oxide. The high-nickel-based positive electrode active material may be capable of realizing high capacity and can be applied to a high-capacity, high-density rechargeable lithium battery.

### Negative Electrode 20

The negative electrode 20 for a rechargeable lithium battery may include a current collector COL2 and a negative electrode active material layer AML2 on the current collector COL2. The negative electrode active material layer AML2 may include a negative electrode active material, and may further include a binder and/or a conductive material (e.g., an electrically conductive material).

For example, the negative electrode active material layer AML2 may include about 90 wt% to about 99 wt% of the negative electrode active material, about 0.5 wt% to about 5 wt% of the binder, and about 0 wt% to about 5 wt% of the conductive material.

The binder may serve to attach the negative electrode active material particles well to each other and also to attach the negative electrode active material well to the current collector COL2. The binder may include a non-aqueous binder, an aqueous binder, a dry binder, or a combination thereof.

The non-aqueous binder may include polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, polyamideimide, polyimide, or a combination thereof.

The aqueous binder may be selected from a styrene-butadiene rubber, a (meth)acrylated styrene-butadiene rubber, a (meth)acrylonitrile-butadiene rubber, (meth)acrylic rubber, a butyl rubber, a fluoro rubber, polyethylene oxide, polyvinylpyrrolidone, polyepichlorohydrin, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resin, polyvinyl alcohol, and a combination thereof.

When an aqueous binder is used as the negative electrode binder, a cellulose-based compound capable of imparting viscosity may be further included. The cellulose-based compound may include at least one of carboxymethyl cellulose, hydroxypropylmethyl cellulose, methyl cellulose, or an alkali metal salt thereof. The alkali metal may include Na, K, or Li.

The dry binder may be a polymer material that is capable of being fibrous. For example, the dry binder may be polytetrafluoroethylene, polyvinylidene fluoride, a polyvinylidene fluoride-hexafluoropropylene copolymer, polyethylene oxide, or a combination thereof.

The conductive material may be used to impart conductivity (e.g., electrical conductivity) to the electrode. Any material that does not cause chemical change(e.g., does not cause an undesirable chemical change in the rechargeable lithium battery) and that conducts electrons can be used in the battery. Non-limiting examples thereof may include a carbon-based material such as natural graphite, artificial graphite, carbon black, acetylene black, ketjen black, a carbon fiber, a carbon nanofiber, and a carbon nanotube; a metal-based material including copper, nickel, aluminium, silver, etc. in a form of a metal powder or a metal fiber; a conductive polymer such as a polyphenylene derivative; or a mixture thereof.

The negative current collector COL2 may include a copper foil, a nickel foil, a stainless steel foil, a titanium foil, a nickel foam, a copper foam, a polymer substrate coated with a conductive metal, or a combination thereof.

### Negative Electrode Active Material

The negative electrode active material may include a material that reversibly intercalates/deintercalates lithium ions, a lithium metal, a lithium metal alloy, a material capable of doping/dedoping lithium, or a transition metal oxide.

The material that reversibly intercalates/deintercalates lithium ions may include a carbon-based negative electrode active material, such as, for example. crystalline carbon, amorphous carbon or a combination thereof. The crystalline carbon may be graphite such as non-shaped, sheet-shaped, flake-shaped, sphere-shaped, or fiber-shaped natural graphite or artificial graphite. The amorphous carbon may be a soft carbon, a hard carbon, a mesophase pitch carbonization product, calcined coke, and the like.

The lithium metal alloy includes an alloy of lithium and a metal selected from Na, K, Rb, Cs, Fr, Be, Mg, Ca, Sr, Si, Sb, Pb, In, Zn, Ba, Ra, Ge, Al, and Sn.

The material capable of doping/dedoping lithium may be a Si-based negative electrode active material or a Sn-based negative electrode active material. The Si-based negative electrode active material may include silicon, a silicon-carbon composite, SiOx (0 < x < 2), a Si-Q alloy (where Q is selected from an alkali metal, an alkaline-earth metal, a Group 13 element, a Group 14 element (excluding Si), a Group 15 element, a Group 16 element, a transition metal, a rare earth element, and a combination thereof). The Sn-based negative electrode active material may include Sn, SnO₂, a Sn-based alloy, or a combination thereof.

The silicon-carbon composite may be a composite of silicon and amorphous carbon. According to an embodiment, the silicon-carbon composite may be in a form of silicon particles and amorphous carbon coated on the surface of the silicon particles. For example, the silicon-carbon composite may include a secondary particle (core) in which primary silicon particles are assembled, and an amorphous carbon coating layer (shell) on the surface of the secondary particle. The amorphous carbon may also be between the primary silicon particles, and, for example, the primary silicon particles may be coated with the amorphous carbon. The secondary particle may exist dispersed in an amorphous carbon matrix.

The silicon-carbon composite may further include crystalline carbon. For example, the silicon-carbon composite may include a core including crystalline carbon and silicon particles and an amorphous carbon coating layer on a surface of the core.

The Si-based negative electrode active material or the Sn-based negative electrode active material may be used in combination with a carbon-based negative electrode active material.

### Separator 30

Depending on the type of the rechargeable lithium battery, the separator 30 may be present between the positive electrode 10 and the negative electrode 20. The separator 30 may include polyethylene, polypropylene, polyvinylidene fluoride, or a multilayer film of two or more layers thereof, and a mixed multilayer film such as a polyethylene/polypropylene two-layer separator, polyethylene/polypropylene/polyethylene three-layer separator, polypropylene/polyethylene/polypropylene three-layer separator, and the like.

The separator 30 may include a porous substrate and a coating layer including an organic material, an inorganic material, or a combination thereof on one or both surfaces of the porous substrate.

The porous substrate may be a polymer film formed of any one selected polymer polyolefin such as polyethylene and polypropylene, polyester such as polyethylene terephthalate and polybutylene terephthalate, polyacetal, polyamide, polyimide, polycarbonate, polyether ketone, polyarylether ketone, polyether ketone, polyetherimide, polyamideimide, polybenzimidazole, polyethersulfone, polyphenylene oxide, a cyclic olefin copolymer, polyphenylene sulfide, polyethylene naphthalate, a glass fiber, TEFLON, and polytetrafluoroethylene, or a copolymer or mixture of two or more thereof.

The organic material may include a polyvinylidene fluoride-based polymer or a (meth)acrylic polymer.

The inorganic material may include inorganic particles selected from Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and a combination thereof, but is not limited thereto.

The organic material and the inorganic material may be mixed in one coating layer, or a coating layer including an organic material and a coating layer including an inorganic material may be stacked.

### Electrolyte Solution ELL

The electrolyte solution ELL for a rechargeable lithium battery may include a non-aqueous organic solvent and a lithium salt.

The non-aqueous organic solvent may serve as a medium for transmitting ions taking part in the electrochemical reaction of a battery.

The non-aqueous organic solvent may be a carbonate-based, ester-based, ether-based, ketone-based, or alcohol-based solvent, an aprotic solvent, or a combination thereof.

The carbonate-based solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and the like.

The ester-based solvent may include methyl acetate, ethyl acetate, n-propyl acetate, dimethyl acetate, methyl propionate, ethyl propionate, decanolide, mevalonolactone, valerolactone, caprolactone, and the like.

The ether-based solvent may include dibutyl ether, tetraglyme, diglyme, dimethoxyethane, 2-methyltetrahydrofuran, 2,5-dimethyltetrahydrofuran, tetrahydrofuran, and the like. In addition, the ketone-based solvent may include cyclohexanone, and the like. The alcohol-based solvent may include ethanol, isopropyl alcohol, and the like and the aprotic solvent may include nitriles such as R-CN (wherein R is a C2 to C20 linear, branched, or cyclic hydrocarbon group, a double bond, an aromatic ring, or an ether bond, and the like); amides such as dimethylformamide; dioxolanes such as 1,3-dioxolane, 1,4-dioxolane, and the like; sulfolanes, and the like.

The non-aqueous organic solvents may be used alone or in combination of two or more.

In addition, when using a carbonate-based solvent, a cyclic carbonate and a chain carbonate may be mixed and used, and the cyclic carbonate and the chain carbonate may be mixed in a volume ratio of about 1: 1 to about 1:9.

The lithium salt dissolved in the organic solvent supplies lithium ions in a battery, enables a basic operation of a rechargeable lithium battery, and improves transportation of the lithium ions between positive and negative electrodes. Examples of the lithium salt include at least one selected from LiPF₆, LiBF₄, LiSbF₆, LiAsF₆, LiClO₄, LiAlO₂, LiAlCl₄, LiPO₂F₂, LiCl, LiI, LiN(SO₃C₂F₅)₂, Li(FSO₂)₂N (lithium bis(fluorosulfonyl)imide, LiFSI), LiC₄F₉SO₃, LiN(CₓF₂ₓ₊₁SO₂)(C_{y}F_{2y+1}SO₂) (wherein x and y are integers of 1 to 20), lithium trifluoromethane sulfonate, lithium tetrafluoroethanesulfonate, lithium difluoro(oxalato)borate (LiDFOB), lithium difluorobis(oxalato)phosphate (LiDFBOP), and lithium bis(oxalato) borate (LiBOB).

### Rechargeable Lithium Battery

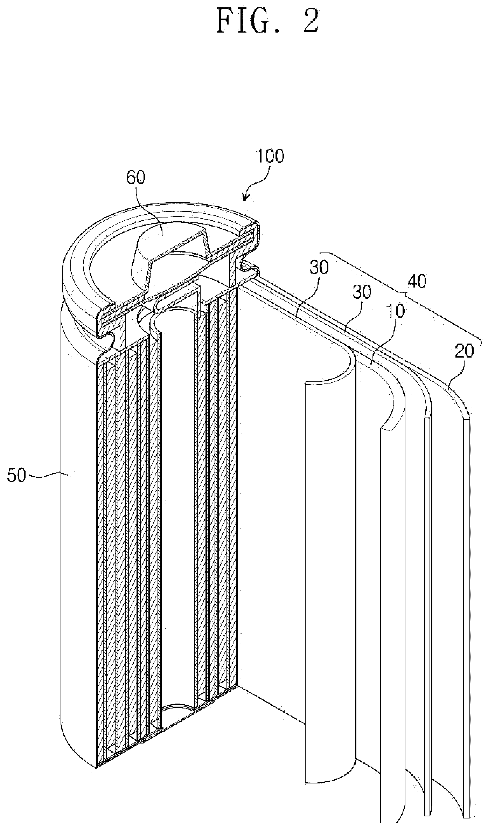

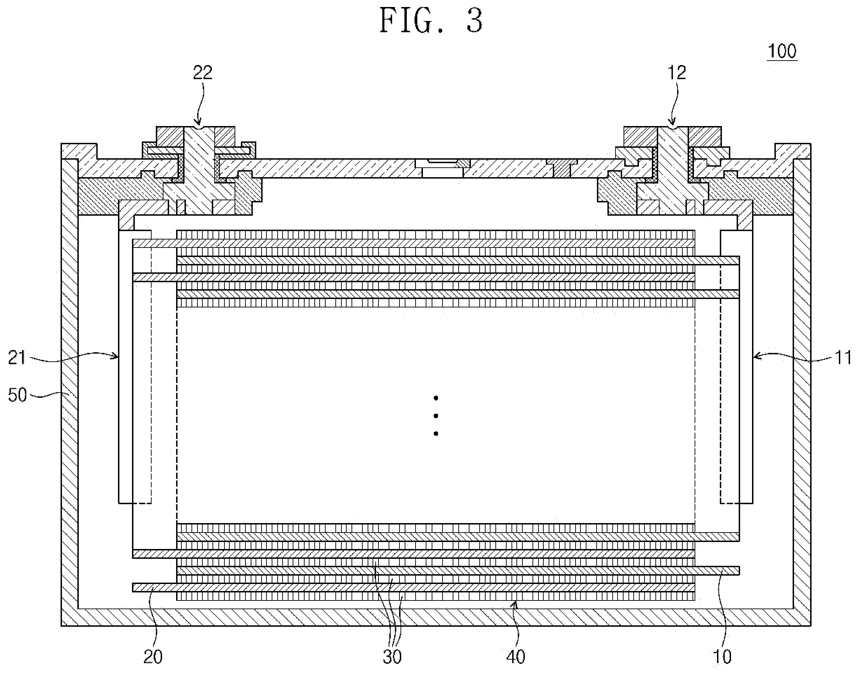

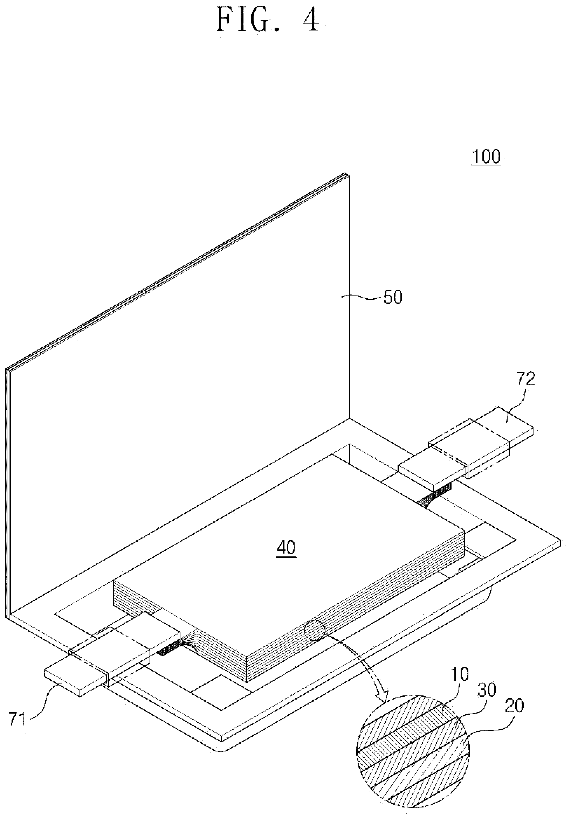

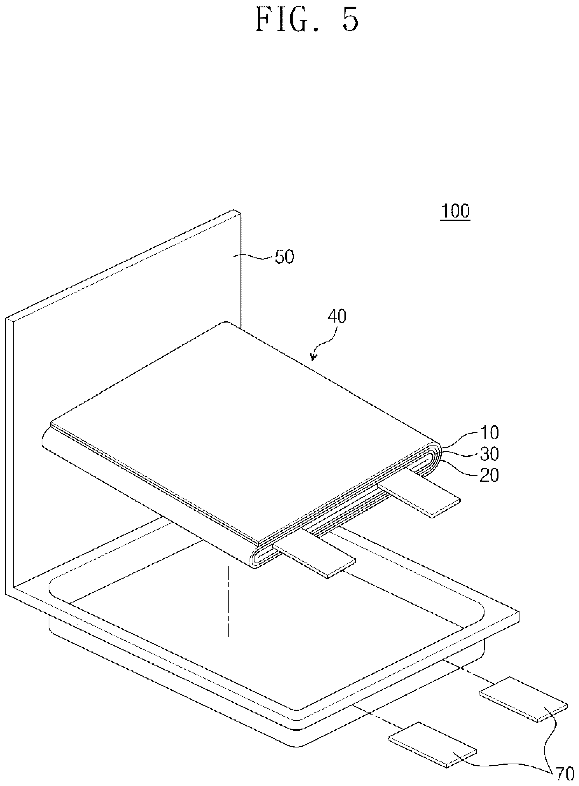

The rechargeable lithium battery may be classified into cylindrical, prismatic, pouch, or coin-type batteries, and the like depending on their shape. FIGS. 2 to 5 are schematic views illustrating a rechargeable lithium battery according to an embodiment. FIG. 2 shows a cylindrical battery, FIG. 3 shows a prismatic battery, and FIGS. 4 and 5 show pouch-type batteries. Referring to FIGS. 2 to 5, the rechargeable lithium battery 100 may include an electrode assembly 40 including a separator 30 between a positive electrode 10 and a negative electrode 20, and a case 50 in which the electrode assembly 40 is included. The positive electrode 10, the negative electrode 20, and the separator 30 may be impregnated with an electrolyte solution (not shown). The rechargeable lithium battery 100 may include a sealing member 60 sealing the case 50, as shown in FIG. 2. In FIG. 3, the rechargeable lithium battery 100 may include a positive lead tab 11, a positive terminal 12, a negative lead tab 21, and a negative terminal 22. As shown in FIGS. 4 and 5, the rechargeable lithium battery 100 may include an electrode tab 70, which may be, for example, a positive electrode tab 71 and a negative electrode tab 72 serving as an electrical path for inducing the current formed in the electrode assembly 40 to the outside.

The rechargeable lithium battery according to an embodiment may be applied to automobiles, mobile phones, and/or various types of electric devices, as non-limiting examples.

Hereinafter, a lithium carbonate according to embodiments of the present invention and a positive electrode active material CAM prepared therefrom will be described in detail.

### Lithium Carbonate LCB

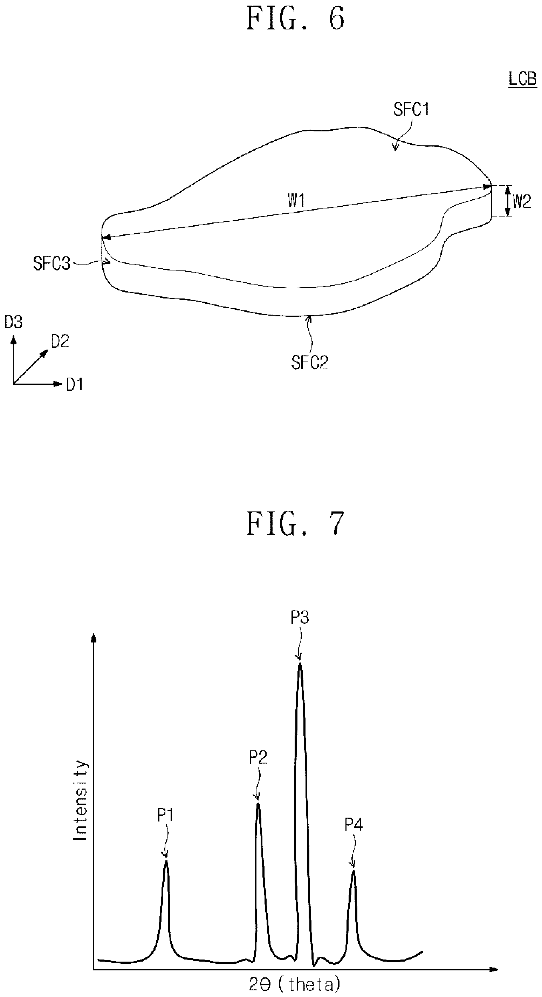

FIG. 6 is a schematic view for schematically describing a lithium carbonate according to embodiments of the present invention. FIG. 7 is an XRD spectrum of a lithium carbonate according to embodiments of the present invention.

Referring to FIG. 6, a lithium carbonate LCB according to embodiments of the present invention may have a plate shape. For example, the lithium carbonate LCB may have a first surface SFC1 and a second surface SFC2 on a plane defined by a first direction D1 and a second direction D2. The first surface SFC1 and the second surface SFC2 may face each other. The lithium carbonate LCB may further include a third surface SFC3 between the first and second surfaces SFC1 and SFC1.

Herein, the first direction D1 and the second direction D2 may cross each other. A third direction D3 may cross the first direction D1 and the second direction D2. For example, the first direction D1, the second direction D2, and the third direction D3 may be mutually orthogonal. The first direction D1 and the second direction D2 may be referred to as horizontal directions, and the third direction D3 may be referred to as a vertical direction.

Lithium carbonate and a transition metal-containing compound may be mixed and heat treated to prepare a positive electrode active material including a lithium transition metal composite oxide. The plate-shaped lithium carbonate LCB may have a relatively large area of a surface (e.g., the first surface SFC1 and the second surface SFC2) that reacts with the transition metal-containing compound during the heat treatment process. Accordingly, the plate-shaped lithium carbonate LCB may reduce activation energy required for the reaction with the transition metal-containing compound during the heat treatment process, and may facilitate the reaction with the transition metal-containing compound.

The lithium carbonate LCB may have a first width W1 and a second width W2. The first width W1 may be greater than the second width W2. The first width W1 may be a particle size of the lithium carbonate LCB. For example, the particle size may be an average particle diameter (D50). The second width W2 may be a thickness of the lithium carbonate LCB. The thickness may be a shortest distance in the vertical direction between the first surface SFC1 and the second surface SFC2. For example, the thickness may be an average thickness.

As an example, the average particle diameter (D50) may be measured by a method widely known to those skilled in the art, for example, by a particle size analyzer, an image of transmission electron microscope (TEM), or an image of scanning electron microscope (SEM). Alternatively, an average particle diameter (D50) value may be obtained by measuring a subject using a dynamic light-scattering-based measuring device, performing data analysis, counting the number of particles for each particle size range, and then calculating the value therefrom. Also, a laser scattering method may be utilized to measure the average particle diameter. In the measuring using the laser diffraction method, more specifically, target particles are distributed in a distribution solvent, introduced into a commercially available laser diffraction particle diameter measuring device (e.g., MT 3000 available from Microtrac, Ltd.), irradiated with ultrasonic waves of about 28 kHz at a power of 60 W, and then an average particle diameter (D50) based on 50% of the particle diameter distribution in the measuring device may be calculated.

For example, the second width W2 may be measured through an image of transmission electron microscope (TEM) or scanning electron microscope (SEM).

For example, the first width W1 may be a largest width in the horizontal direction in an image of scanning electron microscope (SEM) for the lithium carbonate LCB. For example, the second width W2 may be a smallest width in the vertical direction in an image of scanning electron microscope (SEM) for the lithium carbonate LCB.

For example, the first width W1 may be about 3.5 µm to about 15 µm. For example, the second width W2 may be about 0.05 µm to about 3 µm. When the first width W1 and the second width W2 satisfy the above-described ranges, the lithium carbonate LCB may be highly reactive in the preparation of a positive electrode active material, which will be described later, and a rechargeable lithium battery including a positive electrode active material prepared with the lithium carbonate LCB may exhibit superior high-temperature lifespan characteristics.

The lithium carbonate LCB may have an aspect ratio of greater than about 1. For example, the lithium carbonate LCB may have an aspect ratio of about 10 to about 100, about 20 to about 80, or about 30 to about 70. The aspect ratio may be defined as a ratio of a particle size of the lithium carbonate LCB to a thickness of the lithium carbonate LCB (particle size of the lithium carbonate LCB/thickness of the lithium carbonate LCB). The aspect ratio may be defined as a ratio of the first width W1 to the second width W2 (W1/W2).

When the aspect ratio of the lithium carbonate LCB satisfies the above-described range, the lithium carbonate LCB may be highly reactive in the preparation of a positive electrode active material, which will be described later, and a rechargeable lithium battery including a positive electrode active material prepared with the lithium carbonate LCB may exhibit superior high-temperature lifespan characteristics.

The lithium carbonate LCB may have a purity of about 95% to about 99.999%. For example, the lithium carbonate LCB may have a purity of about 95% or greater, about 97% or greater, about 99% or greater, and further, the lithium carbonate LCB may have a purity of about 99.999% or less, or about 99.99% or less. That is, the lithium carbonate LCB may be substantially free of impurities. The impurities may include Mn, Mg, Ca, Fe, Ni, Al, K, or Si. The impurities may be derived from compounds used in the process of preparing a high-nickel positive electrode active material or a lithium carbonate, impurities contained in the compounds, containers used in the preparation, or the like.

When the purity of the lithium carbonate LCB satisfies the above-described range, the lithium carbonate LCB may be highly reactive in the preparation of a positive electrode active material, which will be described later, and a rechargeable lithium battery including a positive electrode active material prepared with the lithium carbonate LCB may exhibit superior high-temperature lifespan characteristics.

As an example, the purity of lithium carbonate LCB may be determined through inductively coupled plasma (ICP) spectrometry.

Referring to FIG. 7, the lithium carbonate LCB may include, in an XRD spectrum using a Cu-Kα line, a first peak P1 corresponding to a (110) plane, a second peak P2 corresponding to a (202) plane, a third peak P3 corresponding to a (002) plane, and a fourth peak P4 corresponding to a (112) plane.

For example, the first peak P1 may be observed in a diffraction angle (2θ) range of about 20° to about 23°. For example, the second peak P2 may be observed in a diffraction angle (2θ) range of about 30° to about 31.5°. For example, the third peak P3 may be observed in a diffraction angle (2θ) range of about 31.5° to about 34°. For example, the fourth peak P4 may be observed in a diffraction angle (2θ) range of about 34° to about 35°.

For example, in an XRD spectrum using a Cu-Kα line, a maximum peak intensity among the first to fourth peaks P1 to P4 may follow the order: P3 > P2 > P1. The maximum peak intensity of the fourth peak P4 may be substantially the same as the maximum peak intensity of the first peak P1, or may be less than the maximum peak intensity of the first peak P1.

A ratio of the maximum intensity of the third peak P3 to the maximum intensity of the first peak P1 (maximum intensity of P3/maximum intensity of P1, i.e., maximum intensity of (002) plane/maximum intensity of (110) plane) may be greater than about 1.0. A ratio of the maximum intensity of the third peak P3 to the maximum intensity of the first peak P1 (maximum intensity of (002) plane/maximum intensity of (1 10) plane) may range from about 1.1 to about 2.

A full width at half maximum (FWHM) of the first peak P1 and the third peak P3 may be relatively narrow. The first peak P1 may have a FWHM of about 0.0300 degrees to about 0.0500 degrees, or about 0.0400 degrees to about 0.0480 degrees. The third peak P3 may have a FWHM of about 0.100 degrees to about 0.177 degrees.

When the ratio of the maximum intensity of the first peak to the maximum intensity of the third peak, and the full width at half maximum of the first peak P1 and the third peak P3 satisfy the above-described ranges, the lithium carbonate LCB may be highly reactive in the preparation of a positive electrode active material, which will be described later, and a rechargeable lithium battery including a positive electrode active material prepared with the lithium carbonate LCB may exhibit superior high-temperature lifespan characteristics.

Although not shown, the XRD spectrum using a Cu-Kα line for the lithium carbonate LCB may further include a plurality of other peaks in addition to the first to fourth peaks P1 to P4.

### Method for preparing lithium carbonate LCB (S10)

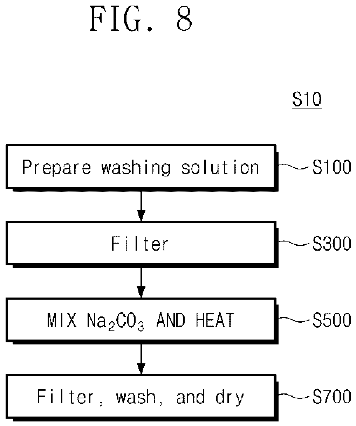

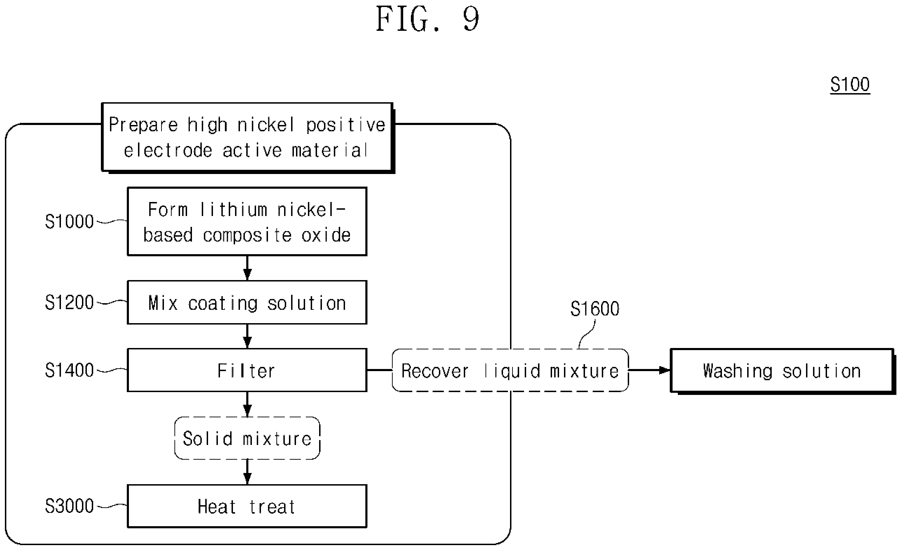

FIG. 8 is a flowchart for schematically describing a method for preparing a lithium carbonate (S10) according to embodiments of the present invention. FIGS. 9 to 12 are schematic views for schematically describing each step of the method for preparing a lithium carbonate.

Referring to FIG. 8, the method for preparing a lithium carbonate LCB according to embodiments of the present invention may include preparing a washing solution (S100), filtering the washing solution (S300), mixing and heating sodium carbonate with the filtered washing solution (S500), and filtering, washing, and drying the mixture (S700).

Referring to FIG. 9, the washing solution may be obtained during a process of preparing a high-nickel positive electrode active material (S100). The method for manufacturing a high-nickel positive electrode active material may include forming a lithium nickel-based composite oxide (S1000), mixing a coating solution (S1200), filtering the mixture (S1400), and heat treating a solid mixture in the mixture (S3000). The preparing of the washing solution (S100) may include forming a lithium nickel-based composite oxide (S1000), mixing a coating solution (S1200), filtering the mixture (S1400), and recovering a liquid mixture in the mixture (S1600).

The high-nickel positive electrode active material may include a lithium nickel-based composite oxide. For example, a compound capable of reversibly intercalating and deintercalating lithium (lithiated intercalation compound) may be used as the high-nickel positive electrode active material.

The high-nickel positive electrode active material may be a lithium nickel-based composite oxide having a nickel (Ni) content of about 80 mol% to about 100 mol% among metals excluding lithium. For example, the high-nickel positive electrode active material may be a lithium nickel-based composite oxide having a nickel (Ni) content of about 85 mol% or greater or about 88% or greater among metals excluding lithium, and may be a lithium nickel-based composite oxide having a nickel (Ni) content of 100 mol% or less, 99 mol% or less, or 95 mol% or less.

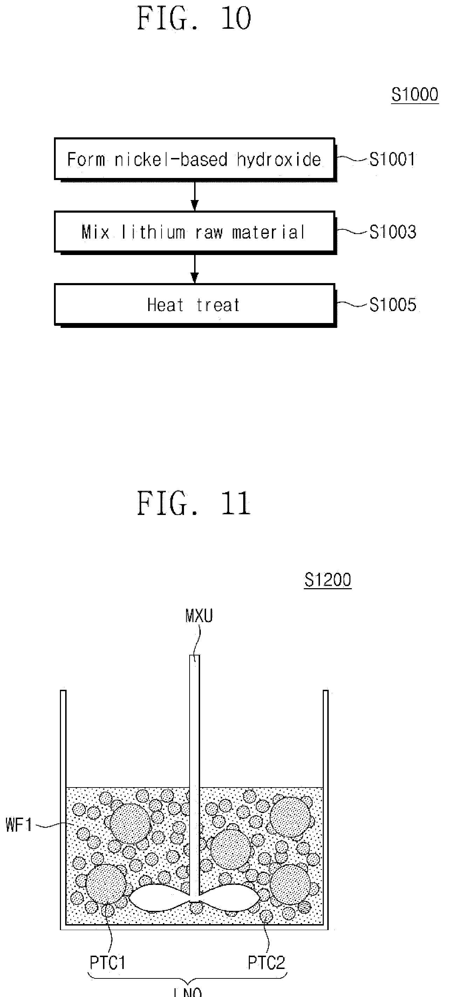

Referring to FIG. 10, a preparation method including forming a nickel-based hydroxide (S1001), mixing the nickel-based hydroxide with a lithium raw material (S1003), and heat treating the mixture (S1005) may be used to prepare the lithium nickel-based composite oxide (S1000).

The nickel-based hydroxide may include a transition metal. The transition metal may include nickel (Ni), and may further include other transition metals excluding nickel. For example, the other transition metals may include at least one selected from the group consisting of Al, B, Ba, Ca, Ce, Co, Cr, Cu, Fe, Mg, Mn, Mo, Nb, Si, Sr, Ti, V, W, and Zr.

The nickel-based hydroxide may be obtained through co-precipitation (S1001). For example, the co-precipitation method may include dissolving transition metal raw materials in a solvent, such as distilled water, and continuously adding a transition metal salt solution into a reactor together with a chelating agent and/or a basic aqueous solution to cause precipitation. After collecting a precipitate in the form of a slurry, a slurry solution may be filtered and dried to obtain a nickel-based hydroxide, which is a metal composite oxide.

The transition metal raw material may include a salt of the transition metal described above. The salt of transition metal, such as sulfate, nitrate, acetate, halide, or hydroxide, may be used, and is not particularly limited as long as the salt is dissolved in the solvent. As an example, the transition metal raw material may include a nickel salt, a cobalt salt, and an aluminium salt. As another example, the transition metal raw material may include a nickel salt, a cobalt salt, and a manganese salt. The transition metal raw material may be mixed by adjusting a molar ratio to allow a positive electrode active material to have high capacity characteristics.

The nickel-based hydroxide may be mixed with the lithium raw material at a certain ratio (S1003). For example, the nickel-based hydroxide and the lithium raw material may be mixed in a molar ratio of about 1:1. The lithium raw material is not particularly limited as long as it is a material typically used during preparation of a positive electrode active material. For example, the lithium raw material may include a lithium salt such as lithium carbonate, lithium nitrate, lithium hydroxide, or lithium sulfate.

A mixture of the nickel-based hydroxide and the lithium raw material may be placed into a furnace and heat treated (S1005). The heat treatment may be performed at a temperature of about 600 °C to about 1000 °C. For example, the heat treatment may be performed at a temperature of about 700 °C to about 800 °C. The heat treatment may be performed in an oxidation atmosphere such as air and oxygen. The heat treatment may be performed for a duration of about 5 hours to about 30 hours. As an example, preliminary firing may be further performed at a temperature of about 150 °C to about 800 °C prior to the heat treatment.

For example, a grinding process may be additionally performed after the heat treatment. Through the grinding process, a lithium nickel-based composite oxide having a desired average particle size may be obtained.

For example, the lithium nickel-based composite oxide may include at least one of a large particle (hereinafter, the first particle, see PTC1 of FIG. 11) and a small particle (hereinafter, the second particle, see PTC2 of FIG. 11). When the first particle and the second particle are included, the first particle and the second particle may each be prepared through the above-described method, and then mixed. For example, the first particle and the second particle may be mixed in a weight ratio of about 95:5 to about 50:50. Alternatively, for example, the first particle and the second particle may be mixed in a weight ratio of about 5:95 to about 50:50. The first particle and the second particle, which are different in average particle size, are mixed and thus a bimodal type positive electrode active material may be prepared.

Referring to FIG. 11, a coating solution WF1 may be mixed with a lithium nickel-based composite oxide LNO (S1200). Through this step, cobalt (Co) may be applied onto a surface of the lithium nickel-based composite oxide LNO.

The coating solution WF1 may include a coating raw material, a precipitant (or pH adjuster), a solvent, or the like. The coating raw material may be a cobalt compound. The coating solution WF1 may coat and/or wash the lithium nickel-based composite oxide LNO. Residual lithium byproducts may be removed through the washing.

As the cobalt compound, any material that may typically apply cobalt is usable. For example, the cobalt compound may include at least one selected from the group consisting of cobalt nitrate, cobalt sulfate, cobalt oxide, cobalt hydroxide, and cobalt carbonate.

As the precipitant (or pH adjuster), any material that may be used for precipitation is usable. For example, the precipitant (or pH adjuster) may include at least one selected from the group consisting of sodium hydroxide (NaOH), lithium hydroxide (LiOH), potassium hydroxide (KOH), and ammonia (NH₃).

The solvent may include distilled water, an alkaline solution, or the like.

The lithium nickel-based composite oxide LNO and the coating raw material may be uniformly mixed through a stirrer MXU.

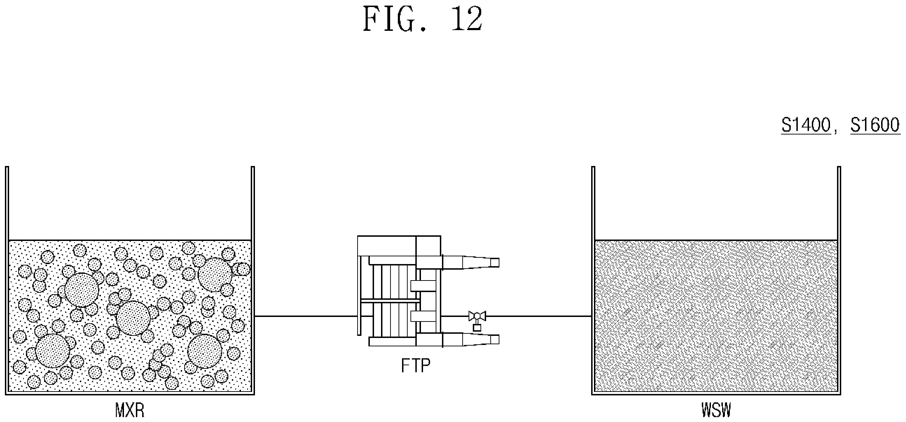

Referring to FIG. 12, a mixture MXR generated through step S1200 may be filtered (S1400). Through the filtering, the mixture may be separated into a solid mixture and a liquid mixture, and the liquid mixture may be recovered (S1600). Herein, the recovered liquid mixture may be defined as a washing solution WSW.

The filtering may be performed using a filtering device typically used in the process of preparing a positive electrode active material. For example, the filtering may be performed through a filter portion FTP. For example, the filter portion FTP may be performed using a filter press. Through the filtering, the solid mixture and the liquid mixture in the mixture may be separated. The separated solid mixture may be changed into a high-nickel positive electrode active material through heat treatment (S3000).

The recovering may be performed using a recovery device of the washing solution according to embodiments of the present invention. The recovery device of the washing solution according to embodiments of the present invention may include a tank portion, a valve portion, a line portion, a pump portion, and the like. The tank portion may include a plurality of tank portions. Any one of the plurality of tank portions may recover a liquid mixture. The liquid mixture recovered in the tank may be the washing solution WSW of the present invention.

The washing solution WSW may contain a high concentration of lithium (Li) and may be substantially free of impurities. As an example, the washing solution may contain lithium (Li) at a concentration of about 1000 ppm or greater. For example, the washing solution may contain lithium (Li) at a concentration of about 1000 ppm to about 10000 ppm, about 2000 ppm to about 5000 ppm, or about 3500 ppm to about 5000 ppm. For example, the impurities in the washing solution WSW may include sodium (Na), potassium (K), magnesium (Mg), calcium (Ca), chlorine (Cl), sulfate (SO₄), or the like, and the impurities in the washing solution may be present at a concentration of about 20 ppm to about 40000 ppm. For example, the washing solution may contain sodium (Na) at a concentration of about 10000 ppm or less, or about 10 ppm to about 10000 ppm. For example, the washing solution may contain sulfate (SO₄) at a concentration of about 30000 ppm or less, or about 20 ppm to about 30000 ppm.

The washing solution WSW prepared through the method described above may be used to prepare the lithium carbonate LCB according to a method, which will be described later.

Referring back to FIG. 8, before the preparing of the lithium carbonate LCB, the washing solution WSW described above may be filtered (S300). Through the filtering, the remaining trace solid mixture may be removed. As another example, although not shown, this step may be skipped.

Referring back to FIG. 8, the filtered washing solution WSW may be mixed with sodium carbonate (Na₂CO₃) and heated (S500). Through this step, solid lithium carbonate may be formed in the mixture.

The washing solution WSW may have a pH of about 11 to about 13. For example, the washing solution WSW may have a pH of about 12 to about 13. When the pH of the washing solution WSW satisfies the above-described ranges, a lithium carbonate may be obtained in a high yield.

The heating may be performed at a temperature of about 50 °C to about 80 °C. For example, the heating may be performed at a temperature of about 50 °C to about 70 °C. The heating may be performed for about 30 minutes to about 300 minutes. When the heating temperature and heating duration satisfy the above-described ranges, a lithium carbonate having a plate shape (see LCB in FIG. 6) may be prepared.

For example, the filtered washing solution WSW may be heated, and then sodium carbonate (Na₂CO₃) may be added thereto. As another example, sodium carbonate (Na₂CO₃) may be added to the washing solution WSW and then the mixture was heated.

Referring back to FIG. 8, the mixture may be filtered, washed, and dried, thereby obtaining a lithium carbonate (see LCB in FIG. 6) (S700).

The filtering may be performed using a filtering device commonly used in the art. A solid lithium carbonate produced from filtering may be obtained. The remaining filtrate may be treated as wastewater or recycled.

The washing may be performed using distilled water.

The lithium (Li) content in the obtained lithium carbonate may range from about 50 wt% to about 96 wt% compared to the lithium content in the washing solution WSW. For example, the lithium (Li) content in the obtained lithium carbonate may range from about 70 wt% to about 86 wt% compared to the lithium content in the washing solution WSW.

The method for preparing a lithium carbonate according to embodiments of the present invention may directly prepare a lithium carbonate, skipping a process of preparing lithium phosphate from the washing solution and then carbonating the lithium phosphate. In addition, the method for preparing a lithium carbonate according to embodiments of the present invention may synthesize a high-purity lithium carbonate more simply and conveniently by using a washing solution that is substantially free of impurities and contains a high concentration of lithium (Li).

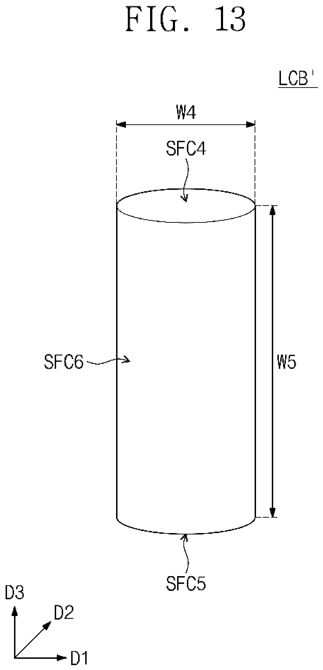

FIG. 13 is a schematic view for schematically describing a lithium carbonate LCB' according to a Comparative Example of the present invention.

The lithium carbonate LCB' according to a Comparative Example of the present invention may have a pillar shape. For example, the lithium carbonate LCB' may have a fourth surface SFC4 and a fifth surface SFC5 on a plane defined by a first direction D1 and a second direction D2. The fourth surface SFC4 and the fifth surface SFC5 may face each other. The lithium carbonate LCB' may further include a sixth surface SFC6 between the fourth and fifth surfaces SFC4 and SFC5. The shape of the fourth surface SFC4 and the fifth surface SFC5 is not limited and may be circular, polygonal, or irregular.

The pillar-shaped lithium carbonate LCB' may have a relatively narrow area of a surface (e.g., the fourth surface SFC4 and the fifth surface SFC5) that reacts with a transition metal-containing compound during a heat treatment process. Accordingly, the pillar-shaped lithium carbonate LCB' may have high activation energy required for the reaction with the transition metal-containing compound during the heat treatment process, and may exhibit relatively lower reactivity with the transition metal-containing compound.

The lithium carbonate LCB' may have a fourth width W4 and a fifth width W5. The fourth width W4 may be smaller than the fifth width W5. For example, the fourth width W4 may be a largest width in a horizontal direction in an SEM image of the lithium carbonate LCB'. For example, the fifth width W5 may be a smallest width in a vertical direction in an SEM image of the lithium carbonate LCB'.

The lithium carbonate LCB' may have an aspect ratio of less than about 1. The aspect ratio of the lithium carbonate LCB' may be defined as a ratio of the fourth width W4 to the fifth width W5 (W4/W5).

As another example, unlike what is shown, the fourth surface SFC4 and the fifth surface SFC5 are not necessarily limited to the shape of a surface, and may also be in a three-dimensional shape such as a conical shape or a polyhedral shape.

The lithium carbonate LCB' may have a purity of about 99.99% to about 99.999%.

In an XRD spectrum using a Cu-Kα line, lithium carbonate LCB' may have a ratio of a maximum intensity of a third peak P3 to a maximum intensity of a first peak P1 (maximum intensity of (002) plane/maximum intensity of (110) plane) of greater than about 2.0.

A full width at half maximum of the first peak P1 and the third peak P3 may each be greater than a full width at half maximum of the first peak P1 and the third peak P3 of the plate-shaped lithium carbonate described above.

The lithium carbonate LCB' may be prepared through heat treatment at a higher temperature in step S500 during the preparation process of FIG. 8.

The lithium carbonate LCB' may exhibit relatively low reactivity in a process of preparing a positive electrode active material, and a rechargeable lithium battery including a positive electrode active material prepared with the lithium carbonate LCB' may exhibit relatively low high-temperature lifespan characteristics.

### Method for Preparing Positive Electrode Active Material CAM

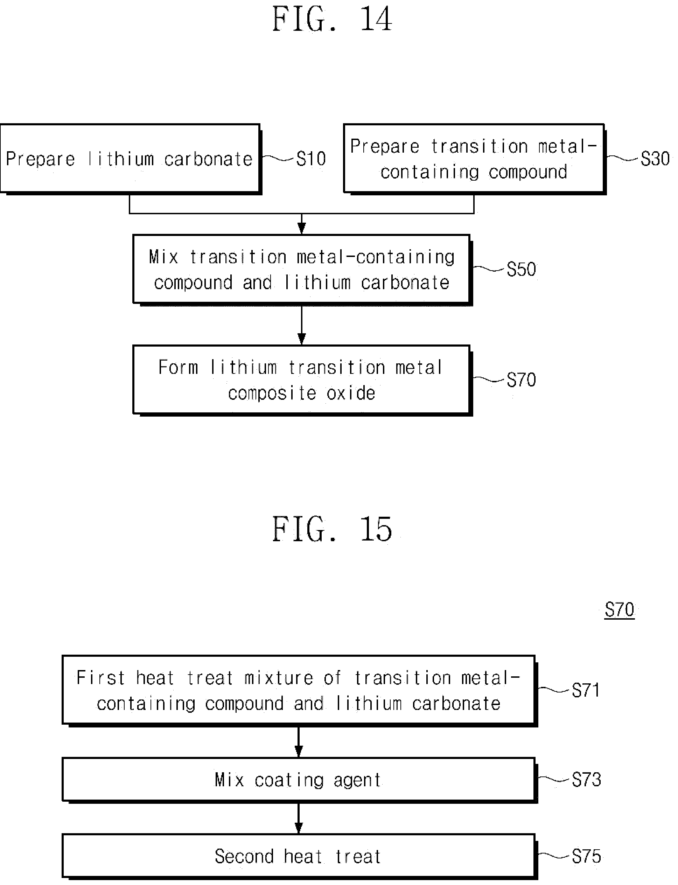

FIG. 14 is a flowchart for describing a method for preparing a positive electrode active material CAM according to embodiments of the present invention. FIG. 15 is a flowchart for describing an embodiment of step S70.

Referring to FIG. 14, the method for preparing a positive electrode active material CAM according to embodiments of the present invention may include preparing a lithium carbonate (S10), preparing a transition metal-containing compound (S30), mixing the transition metal-containing compound and the lithium carbonate (S50), and forming a lithium transition metal composite oxide (S70).

The lithium carbonate LCB is as described with reference to FIGS. 6 and 7. The lithium carbonate LCB may be prepared through the preparation method described with reference to FIGS. 8 to 12 (S10).

The prepared transition metal-containing compound and the lithium carbonate may be mixed and heat treated to form a lithium transition metal composite oxide (S30, S50, S70). For example, a grinding process may be additionally performed after the heat treatment. Through the grinding process, a lithium nickel-based composite oxide having a desired average particle size may be obtained. The lithium transition metal composite oxide may include a lithium nickel-based oxide, a lithium cobalt-based oxide, a lithium manganese-based oxide, a lithium iron phosphate-based compound, a cobalt-free nickel-manganese-based oxide, or a combination thereof.

As an example, steps S30 to S70 in which the lithium transition metal composite oxide is a lithium nickel-based composite oxide are described with reference to FIGS. 14 and 15.

In this case, the transition metal-containing compound may be a nickel-based hydroxide. The nickel-based hydroxide may be obtained through co-precipitation (S30). For example, the co-precipitation method may include dissolving transition metal raw materials in a solvent, such as distilled water, and continuously adding a transition metal salt solution into a reactor together with a chelating agent and/or a basic aqueous solution to cause precipitation. After collecting a precipitate in the form of a slurry, a slurry solution may be filtered and dried to obtain a nickel-based hydroxide, which is a metal composite oxide.

The nickel-based hydroxide may be mixed with a lithium carbonate in a certain ratio (S50). For example, the nickel-based hydroxide and the lithium carbonate may be mixed in a molar ratio of about 1: 1.

The mixture of nickel-based hydroxide and lithium carbonate may be placed into a furnace and heat treated (S70) to prepare a lithium nickel-based composite oxide. Referring to FIG. 15, this step may include first heat treating the mixture of nickel-based hydroxide and lithium carbonate (S71), mixing a coating agent (S73), and second heat treating the mixture (S75).

The first heat treatment may be performed at a temperature of about 600 °C to about 1000 °C. For example, the first heat treatment may be performed at a temperature of about 700 °C to about 800 °C. The first heat treatment may be performed for a duration of about 5 hours to about 30 hours. As an example, preliminary firing may be further performed prior to the first heat treatment.

The coating agent may include a transition metal oxide. For example, the transition metal oxide may include at least one selected from the group consisting of titanium dioxide (TiO₂), magnesium oxide (MgO), aluminium oxide (Al₂O₃), boron oxide (B₂O₃), and zirconium oxide (ZrO₂). The transition metal oxide and the coating agent may be dry mixed.

The second heat treatment may be performed at a temperature of about 500 °C to about 800 °C. For example, the second heat treatment may be performed at a temperature of about 600 °C to about 800 °C. The second heat treatment may be performed for a duration of about 5 hours to about 30 hours.

As another example, referring back to FIG. 14, steps S30 to S70 in which the lithium transition metal composite oxide is a lithium cobalt-based composite oxide are described.

In this case, the transition metal-containing compound may be a cobalt-based oxide (S30). The cobalt-based oxide may be mixed with a lithium carbonate in a certain ratio (S50). For example, the cobalt-based oxide and the lithium carbonate may be mixed in a molar ratio of about 1:1. The mixture of cobalt-based oxide and lithium carbonate may be placed into a furnace and heat treated (S70) to prepare a lithium cobalt-based composite oxide. The heat treatment may be performed at a temperature of about 900 °C to about 1,200 °C. The heat treatment may be performed for a duration of about 5 hours to about 30 hours.

### Positive Electrode Active Material CAM

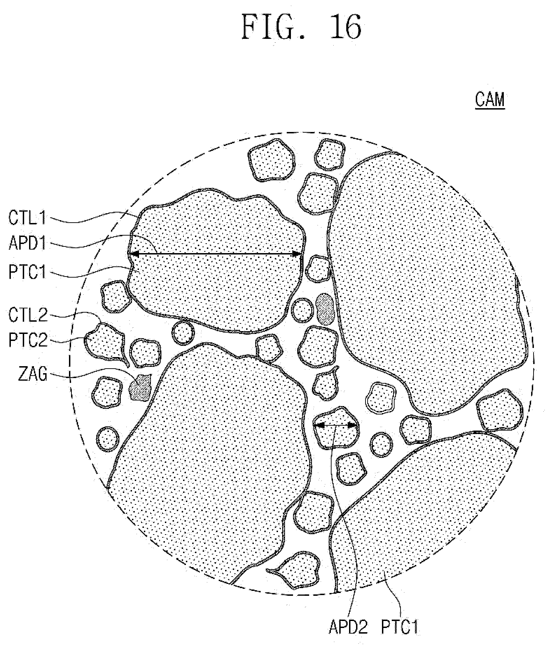

FIG. 16 is a cross-sectional view for describing a positive electrode active material CAM according to embodiments of the present invention. The positive electrode active material CAM of FIG. 16 is shown as a powder form before being used in a positive electrode active material layer AML1 described with reference to FIG. 1.

Referring to FIG. 16, the positive electrode active material CAM may include at least one of a plurality of first particles PTC1 or a plurality of second particles PTC2. The plurality of first particles PTC1 and the plurality of second particles PTC2 may each be the first particles and the second particles described with reference to FIG. 11. For example, the positive electrode active material CAM may include the plurality of first particles PTC1. For example, the positive electrode active material CAM may include the plurality of second particles PTC2. For example, the positive electrode active material CAM may include the plurality of first particles PTC1 and the plurality of second particles PTC2.

The plurality of first particles PTC1 may have a first average particle diameter APD1, and the plurality of second particles PTC2 may have a second average particle diameter APD2. The first average particle diameter APD1 may be greater than the second average particle diameter APD2. The first average particle diameter APD1 may range from about 5 µm to about 25 µm. For example, the first average particle diameter APD1 may range from about 7 µm to about 25 µm, about 10 µm to about 25 µm, about 15 µm to about 25 µm, or about 10 µm to about 20 µm. The second average particle diameter APD2 may range from about 0.1 µm to about 10 µm. For example, the second average particle diameter APD2 may be range from about 0.1 µm to about 7 µm, about 0.5 µm to about 6 µm, or about 1 µm to about 5 µm.

For example, the average particle diameter may be obtained by measuring a particle diameter by randomly selecting about 30 first particles and second particles on an electron microscope image of a positive electrode active material, and taking the diameter of particles at an accumulated volume of about 50 vol% in particle size distribution as an average particle diameter. As another example, the average particle diameter may be obtained by taking the diameter of particles at an accumulated volume of about 50 vol% in particle size distribution as an average particle diameter, as measured by a particle size analyzer.

The positive electrode active material CAM according to an embodiment of the present invention may be in a bimodal form including the plurality of first particles PTC1 and the plurality of second particles PTC2, which are different in average particle diameter. Voids between the plurality of first particles PTC1 are filled with the plurality of second particles PTC2, and thus the positive electrode active material layer AML1 may have enhanced packing density. That is, the positive electrode active material layer AML1 according to embodiments of the present invention may have a relatively high capacity and high energy density per unit volume.

In an embodiment, the plurality of first particles PTC1 and the plurality of second particles PTC2 may be provided in a weight ratio of about 95:5 to about 50:50. In another embodiment, the plurality of first particles PTC1 and the plurality of second particles PTC2 may be provided in a weight ratio of about 5:95 to about 50:50. For example, in the positive electrode active material CAM, the weight of the plurality of first particles PTC1 may be greater than the weight of the plurality of second particles PTC2.

In an embodiment, the positive electrode active material CAM may include only the plurality of first particles PTC1. That is, the plurality of second particles PTC2 may not be provided.

For example, the plurality of first particles PTC1 may each be in a polycrystal form and may include a secondary particle in which at least two primary particles are aggregated. The plurality of first particles PTC1 may each be either granular or spherical in shape.

Alternatively, as another example, the plurality of first particles PTC1 may each be in the form of a single particle, present alone with no grain boundaries therein, and composed of an one particle, and may be a one-body particle or have a monolith structure or a one-body structure, in which particles are not mutually aggregated but are present as an independent phase in terms of morphology, or a non-aggregated particle, and may be, for example, a single crystal. The single particle form may include one crystal grain or several crystal grains. The crystal grain may be a smallest unit having a single crystal direction. For example, the single particle form may include one primary particle and/or one single particle in which a plurality of primary particles are merged into a single body. The plurality of first particles PTC1 may each be spherical or elliptical. Alternatively, the plurality of first particles PTC1 may be polyhedral or irregular.

As an example, the plurality of second particles PTC2 may each be in the form of a single particle, present alone with no grain boundaries therein, and composed of an one particle, and may be a one-body particle or have a monolith structure or a one-body structure, in which particles are not mutually aggregated but are present as an independent phase in terms of morphology, or a non-aggregated particle, and may be, for example, a single crystal. The single particle form may include one crystal grain or several crystal grains. The crystal grain may be a smallest unit having a single crystal direction. For example, the single particle form may include one primary particle and/or one single particle in which a plurality of primary particles are merged into a single body. The plurality of second particles PTC2 may each be spherical or elliptical. Alternatively, the plurality of second particles PTC2 may be polyhedral or irregular. The positive electrode active material CAM includes the plurality of second particles PTC2, and may thus exhibit high capacity, high energy density, and enhanced lifespan characteristics.

The plurality of first particles PTC 1 and the plurality of second particles PTC2 may each include a lithium transition metal composite oxide. A compound capable of reversibly intercalating and deintercalating lithium (lithiated intercalation compound) may be used as each of the plurality of first particles PTC1 and the plurality of second particles PTC2. Specifically, at least one of a composite oxide of lithium and a metal selected from cobalt, manganese, nickel, and a combination thereof may be used.

The composite oxide may be a lithium transition metal composite oxide, and specific examples thereof include lithium nickel-based oxide, lithium cobalt-based oxide, lithium manganese-based oxide, lithium iron phosphate-based compound, cobalt-free nickel-manganese-based oxide, or a combination thereof. Specific examples of the composite oxide are as described above.

For example, the lithium nickel-based composite oxide may be a lithium nickel-based composite oxide including a high content of nickel (Ni). For example, the lithium nickel-based oxide may be a lithium nickel-based composite oxide having a nickel (Ni) content of about 50 mol% or greater, 60 mol% or greater, about 80 mol% or greater, about 90 mol% or greater, or about 91 mol% or greater, and about 100 mol% or less, about 99.9 mol% or less, or about 99 mol% or less, among metals excluding lithium. That is, the lithium nickel-based composite oxide may be a lithium nickel-based composite oxide having a nickel (Ni) moles of about 60 mol% or greater, about 80 mol% or greater, about 90 mol% or greater, or about 91 mol% or greater, and about 100 mol% or less, about 99.9 mol% or less, or about 99 mol% or less, with respect to a total moles of transition metals. When the content of nickel (Ni) satisfies the above-described ranges, the positive electrode active material CAM may achieve high capacity and high performance.

For example, the lithium transition metal composite oxide including the plurality of first particles PTC1 and the plurality of second particles PTC2 may be represented by Formula 1 below.

[Formula 1] Liₐ₁Niₓ₁M¹_{y1}M²_{z1}O_{2-b1}X_{b1}

In Formula 1 above, a1, x1, y1, z1, and b1 satisfy 0.8≤a1≤1.8, 0.5≤x1≤1, 0≤y1≤0.5, 0≤z1≤0.2, 0.9≤x1+y1+z1≤1.1, and 0≤b1≤0.1, M¹ and M² are each independently at least one element selected from the group consisting of aluminium (Al), boron (B), barium (Ba), calcium (Ca), cerium (Ce), cobalt (Co), chromium (Cr), copper (Cu), iron (Fe), magnesium (Mg), manganese (Mn), molybdenum (Mo), niobium (Nb), silicon (Si), strontium (Sr), titanium (Ti), vanadium (V), tungsten (W), and zirconium (Zr), and X is at least one element selected from the group consisting of fluorine (F), phosphorus (P), and sulfur (S). For example, x1+y1+z1=1 may be satisfied.

For example, the lithium transition metal composite oxide including the plurality of first particles PTC1 and the plurality of second particles PTC2 may be represented by Formula 2 below. The compound represented by Formula 2 may be a lithium nickel cobalt-based composite oxide.

[Formula 2] Liₐ₂Niₓ₂Co_{y2}M³_{z2}O_{2-b2}X_{b2}

In Formula 2 above, a2, x2, y2, z2, and b2 satisfy 0.8≤a2≤1.8, 0.5≤x2<1, 0<y2≤0.5, 0≤z2≤0.2, 0.9≤x2+y2+z2≤1.1, and 0≤b2≤0.1, M³ is at least one element selected from the group consisting of Al, B, Ba, Ca, Ce, Cr, Fe, Mg, Mn, Mo, Nb, Si, Sr, Ti, V, W, and Zr, and X is at least one element selected from the group consisting of F, P, and S. For example, x2+y2+z2=1 may be satisfied.

For example, the lithium transition metal composite oxide including the plurality of first particles PTC1 and the plurality of second particles PTC2 may be represented by Formula 3 below. The compound represented by Formula 3 may be a lithium nickel cobalt aluminium oxide or a lithium nickel cobalt manganese oxide.

[Formula 3] Liₐ₃Niₓ₃Coy₃M⁴_{z3}M⁵_{w3}O_{2-b3}X_{b3}

In Formula 3 above, a3, x3, y3, z3, w3, and b3 satisfy 0.8≤a3≤1.8, 0.5≤x3≤0.98, 0.01≤y3≤0.49, 0.01≤z3≤0.49, 0≤w3≤0.49, 0.9≤x3+y3+z3+w3≤1.1, and 0≤b3≤0.1, M⁴ is at least one selected from the group consisting of Al and Mn, M⁵ is at least one element selected from the group consisting of B, Ba, Ca, Ce, Cr, Fe, Mg, Mo, Nb, Si, Sr, Ti, V, W, and Zr, and X is at least one element selected from the group consisting of F, P, and S. For example, x3+y3+z3+w3=1 may be satisfied.

For example, the lithium transition metal composite oxide including the plurality of first particles PTC1 and the plurality of second particles PTC2 may be represented by Formula 4 below. The compound of Formula 4 may be a cobalt-free lithium nickel-manganese-based oxide.

[Formula 4] Liₐ₄Niₓ₄Mn_{y4}M⁶_{z4}O_{2-b4}X_{b4}

In Formula 4 above, a4, x4, y4, z4, and b4 satisfy 0.8<a4<1.8, 0.5≤x4<1, 0<y4≤0.5, 0≤z4≤0.5, 0.9≤x4+y4+z4≤1.1, and 0≤b4≤0.1, M⁶ is at least one element selected from the group consisting of Al, B, Ba, Ca, Ce, Cr, Fe, Mg, Mo, Nb, Si, Sr, Ti, V, W, and Zr, and X is at least one element selected from the group consisting of F, P, and S.

For example, the lithium transition metal composite oxide including the plurality of first particles PTC1 and the plurality of second particles PTC2 may be represented by Formula 5 below. The compound of Formula 5 may be a lithium cobalt-based oxide.

[Formula 5] Liₐ₅Coₓ₅M⁷₁₋ₓ₅O₂

In Formula 5 above, a5 and x5 satisfy 0.8≤a5≤1.8 and 0.6≤x5≤1, M⁷ is at least one element selected from the group consisting of Al, B, Ba, Ca, Ce, Cr, Cu, F, Fe, Mg, Mn, Mo, Nb, P, S, Si, Sr, Ti, V, W, and Zr.

For example, the lithium transition metal composite oxide including the plurality of first particles PTC1 and the plurality of second particles PTC2 may be represented by Formula 6 below. The compound of Formula 6 may be a lithium iron phosphate-based compound.

[Formula 6] Liₐ₆Feₓ₆M⁸₁₋ₓ₆PO₄

In Formula 6 above, a6 and x6 satisfy 0.8≤a6≤1.8 and 0.6≤x6≤1, M⁸ is at least one element selected from the group consisting of Al, B, Ba, Ca, Ce, Co, Cr, Cu, F, Fe, Mg, Mn, Mo, Nb, P, S, Si, Sr, Ti, V, W, and Zr.

The positive electrode active material CAM according to an embodiment of the present invention may further include a first coating layer CTL1 and a second coating layer CTL2 positioned on surfaces of the plurality of first particles PTC1 and the plurality of second particles PTC2. The first coating layer CTL1 and the second coating layer CTL2 may be positioned on an entire portion or at least a portion of the surfaces of the plurality of first particles PTC1 and the plurality of second particles PTC2. In the first coating layer CTL1 and the second coating layer CTL2, structural collapse induced by repeated charge and discharge may be effectively suppressed, resulting in enhanced room temperature and high temperature lifespan characteristics.

The first coating layer CTL1 and the second coating layer CTL2 may include a transition metal and a transition metal-containing compound. For example, the first coating layer CTL1 and the second coating layer CTL2 may include nickel, cobalt, or aluminium, but are not limited to the examples described. For example, the transition metal-containing compound may be a transition metal oxide, a transition metal hydroxide, a transition metal carbonate, a composite thereof, or a mixture thereof.

The positive electrode active material CAM according to an embodiment of the present invention may further include a grain boundary coating portion positioned on surfaces of primary particles inside the plurality of first particles PTC1. The grain boundary coating portion is present in an inner portion rather than a surface of the secondary particle, and may be coated along an interface of the primary particles inside the secondary particle, and thus may be described as grain boundary coated. Herein, the inner portion of the secondary particle indicates an entire inner portion except for the surface and, for example, may indicate an entire inner portion from a depth of approximately 10 nm with respect to an outer surface, or a region from a depth of about 10 nm to a depth of about 2 µm. In the plurality of first particles PTC1, the inclusion of the grain boundary coating portion may enhance structural stability, induce a uniform and even coating on the surface, and properly adjust the coating content on the surface to obtain initial charge/discharge efficiency and lifespan characteristics without an increase in resistance.

The positive electrode active material CAM may further include an aggregate ZAG. The aggregate ZAG may be provided in a space between the plurality of first particles PTC1 and the plurality of second particles PTC2. The aggregate ZAG may be derived from a process of forming the first coating layer CTL1, the second coating layer CTL2, and the grain boundary coating portion.

The positive electrode active material CAM according to embodiments of the present invention may be prepared through a preparation method, which will be described later. The positive electrode active material CAM according to embodiments of the present invention may be prepared using a lithium carbonate. A rechargeable lithium battery including the positive electrode active material CAM according to embodiments of the present invention may exhibit excellent high-temperature lifespan characteristics. As an example, a rechargeable lithium battery may have a capacity retention of at least 90% when charged and discharged 30 times at 1 C/1 C at 45 °C.

Hereinafter, the present invention will be described in more detail through Examples. However, the Examples are only illustrations for describing the present invention, and the scope of the present invention is not limited to the Examples below.

### Example 1

Ni_{0.88}Co_{0.09}Al_{0.03}(OH)₂ and lithium hydroxide (LiOH) were mixed and fired, and a coating solution containing cobalt sulfate (CoSO₄), sodium hydroxide (NaOH), and distilled water was added, and then the liquid mixture was recovered through filtration, thereby preparing a washing solution containing 4450 ppm of lithium (Li).

The washing solution was filtered to remove the remaining trace solid mixture. Sodium carbonate (Na₂Co₃) was mixed with the filtered washing solution and the mixture was heated. The heating was performed at about 60 °C for 60 minutes. The mixture was filtered, washed with distilled water, and dried to prepare a plate-shaped lithium carbonate (Li₂CO₃).

Nickel-based hydroxide (Ni_{0.50}Co_{0.20}Mn_{0.30}(OH)₂) and the plate-shaped lithium carbonate were dry mixed in a molar ratio of about 1:1 using a Henschel mixer, and then subjected to a first heat treatment at about 750 °C for 15 hours. Titanium dioxide (TiO₂) was added to the mixture subjected to the first heat treatment and dry mixed using a Henschel mixer, and then subjected to a second heat treatment at about 700 °C for 15 hours. Thus, a positive electrode active material including lithium nickel oxide (Formula: approximately LiNi_{0.50}Co_{0.20}Mn_{0.30}O₂) was prepared.

### Comparative Example 1

A positive electrode active material was prepared in the same manner as in Example, except that a pillar-shaped lithium carbonate (Li₂CO₃) was prepared by mixing sodium carbonate (Na₂Co₃) with the filtered washing solution and heating the mixture at about 90 °C, and that instead of the plate-shaped lithium carbonate, nickel-based hydroxide (Ni_{0.50}Co_{0.20}Mn_{0.30}(OH)₂) and a pillar-shaped lithium carbonate were dry mixed in a molar ratio of about 1:1 using a Henschel mixer.

### Preparation of Positive Electrode

95 wt% of a final positive electrode active material, 3 wt% of a polyvinylidene fluoride binder, and 2 wt% of a carbon black conductive material were mixed in an N-methylpyrrolidone solvent to prepare a positive electrode active material slurry. The positive electrode active material slurry was applied onto an aluminum current collector, dried and rolled to prepare a positive electrode.

### Preparation of Rechargeable Lithium Battery

A 2032 type coin half-cell was prepared using the prepared positive electrode and a lithium metal counter electrode as a counter electrode. A separator (thickness: about 16 µm) formed of a porous polyethylene (PE) film was placed between the positive electrode and the lithium metal counter electrode, and an electrolyte solution was injected to prepare a rechargeable lithium battery. As an electrolyte, an electrolyte solution obtained by mixing 1.3 M LiPF₆ with a mixed solvent containing ethylene carbonate (EC), ethylmethyl carbonate (EMC), and dimethyl carbonate (DMC) in a volume ratio of 3:4:3 was used.

### Experimental Example 1: Analysis of Lithium Carbonate (1)

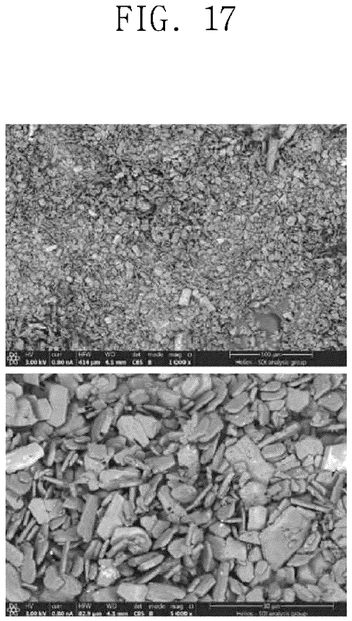

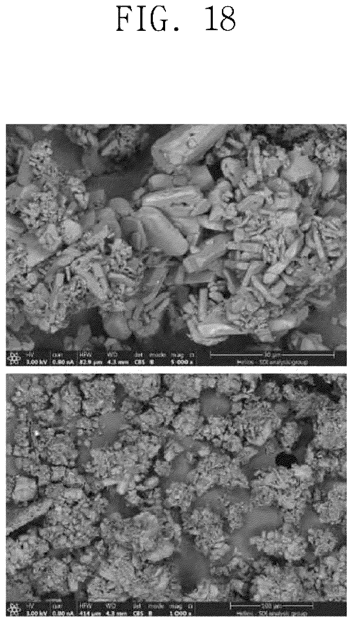

FIGS. 17 and 18 are images of scanning electron microscope (SEM) for lithium carbonates from Example 1 and Comparative Example 1. Referring to FIGS. 17 and 18, the lithium carbonate from Example 1 had a plate-shaped structure, while the lithium carbonate from Comparative Example 1 had a pillar-shaped structure.

An aspect ratio was calculated by taking a largest width in a horizontal direction of the plate-shaped lithium carbonate observed in FIG. 17 as a first width, and a smallest width in a vertical direction as a second width. When the results of calculating the aspect ratio of about 50 plate-shaped lithium carbonates were averaged, the result was about 50. An aspect ratio was calculated by taking a largest width in a horizontal direction of the pillar-shaped lithium carbonate observed in FIG. 18 as a fourth width, and a smallest width in a vertical direction as a fifth width. When the results of calculating the aspect ratio of about 50 pillar-shaped lithium carbonates were averaged, the result was about 0.2.

### Experimental Example 2: Analysis of Lithium Carbonate (2)

The composition and content of lithium carbonates from Example 1 and Comparative Example 1 were analyzed using ICP. The results are shown in Table 1. The content of all elements excluding water (H₂O) was measured in units of parts per million (ppm).

**[Table 1]**

| Item | Mn | Mg | Ca | Zn | Cu | Fe | Na | Al | K | Cr | Cd | Pb | Si | H₂O |
|---|---|---|---|---|---|---|---|---|---|---|---|---|---|---|
| Example 1 | 1 | 48 | 107 | 0 | 0 | 3 | 538 | 9 | 10 | 0 | 0 | 0 | 62 | 0.06% |
| Comparative Example 1 | 1 | 1 | 3 | 0 | 0 | 0 | 40 | 1 | 9 | 0 | 0 | 0 | 2 | 0.04% |

Referring to Table 1, the lithium carbonate of Example 1 had a purity of about 99.92%, and the lithium carbonate of Comparative Example 1 had a purity of about 99.99%.

### Experimental Example 3: Analysis of Lithium Carbonate (3)

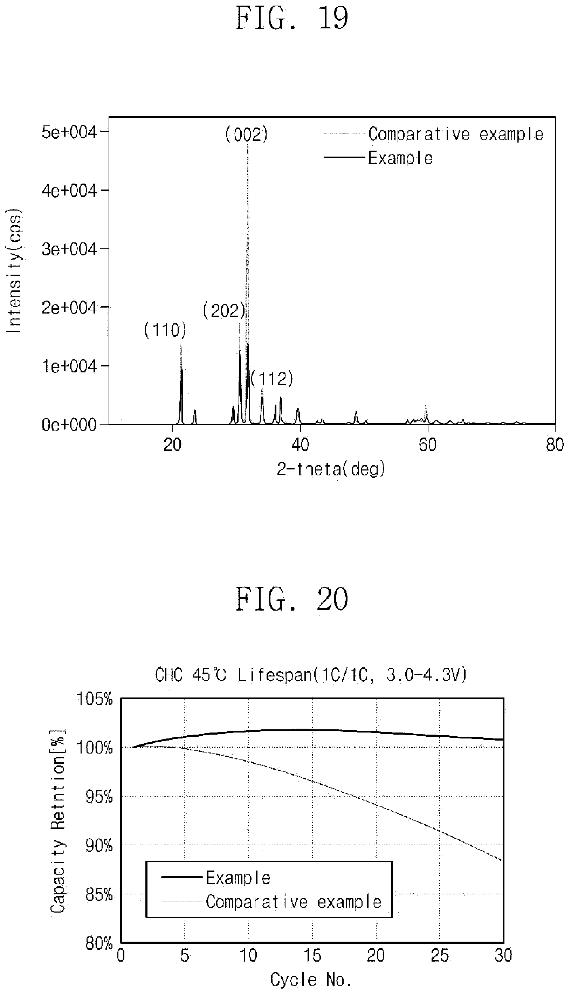

FIG. 19 is XRD spectrum results using a Cu-Kα line for lithium carbonates from Example 1 and Comparative Example 1. Referring to FIG. 19, the lithium carbonates from Example 1 and Comparative Example 1 included peaks each corresponding to (110) plane, (202) plane, (002) plane, and (112) plane. The ratio of maximum intensity of (002) plane/maximum intensity of (110) plane and the full width at half maximum are shown in Table 2.

**[Table 2]**

| Item | Ratio of maximum intensity of (002) plane/maximum intensity of (110) plane | Full width at half maximum of (110) peak | Full width at half maximum of (002) peak |
|---|---|---|---|
| Example 1 | 1.4 | 0.044 | 0.175 |
| Comparative Example 1 | 3.3 | 0.054 | 0.179 |

Referring to Table 2, the lithium carbonate from Example 1 had a smaller ratio of the maximum intensity of the (002) plane/the maximum intensity of the (110) plane than the lithium carbonate from Comparative Example 1. In addition, the lithium carbonate from Example 1 had a smaller full width at half maximum of the (110) peak and the (002) peak than the lithium carbonate from Comparative Example 1 .

### Experimental Example 4: Evaluation of Battery Life at High Temperature

Rechargeable lithium batteries including the positive electrode active materials according to Example 1 and Comparative Example 1 were evaluated for high-temperature lifespan characteristics. For initial charging/discharging, the rechargeable lithium batteries were initially charged up to 4.3 V under constant current (0.1 C) conditions, and after 10 minutes of rest, discharged up to 3.0 V under constant current (0.1 C) conditions, and then charged and discharged 30 times at 1 C/1 C at 45 °C to evaluate the high-temperature lifespan characteristics. The results are shown in FIG. 20.

Referring to FIG. 20, it is determined that the rechargeable lithium battery including Example 1 has superior high-temperature lifespan characteristics than the rechargeable lithium battery including Comparative Example 1.

A lithium carbonate according to an embodiment of the present invention may exhibit excellent purity, and a rechargeable lithium battery including a positive electrode active material prepared using the lithium carbonate may exhibit excellent high-temperature lifespan characteristics.

In a lithium carbonate according to an embodiment of the present invention, a lithium carbonate having the above-described characteristics may be simply and conveniently prepared.

A rechargeable lithium battery according to an embodiment of the present invention may exhibit excellent high-temperature lifespan characteristics.

Although the embodiments of the present invention have been described above with reference to the accompanying drawings, the present invention may be applied in other specific forms without changing the technical idea or essential features thereof. Therefore, it should be understood that the embodiments described above are presented as examples in all respects and not restrictive.

Embodiments are set out in the following clauses:
Clause 1. A method for preparing a lithium carbonate, the method comprising:
   mixing a lithium nickel-based composite oxide and a coating solution to form a first mixture, wherein the coating solution includes a coating raw material, a precipitant, and a solvent;
   filtering the first mixture to recover a washing solution containing at least 1000 ppm of lithium; filtering the washing solution;
   mixing and heating the filtered washing solution and sodium carbonate to form a second mixture; and
   filtering, washing, and drying the second mixture,
   wherein the heating is performed at a temperature of about 50 °C to about 80 °C.
Clause 2. The method of clause 1, wherein the lithium nickel-based composite oxide has a nickel (Ni) content of about 80 mol% to about 100 mol% among metals excluding lithium.
Clause 3. The method of clause 1 or clause 2, wherein the coating raw material is a cobalt compound.
Clause 4. The method of clause 3, wherein the cobalt compound comprises at least one selected from the group consisting of cobalt nitrate, cobalt sulfate, cobalt oxide, cobalt hydroxide, and cobalt carbonate.
Clause 5. The method of any one of clauses 1 to 4, wherein the precipitant comprises at least one selected from the group consisting of sodium hydroxide, lithium hydroxide, potassium hydroxide, and ammonia.
Clause 6. The method of any one of clauses 1 to 5, wherein the washing solution comprises about 3500 ppm to about 5000 ppm of lithium.
Clause 7. The method of any one of clauses 1 to 6, wherein the washing solution contains impurities at a concentration of about 20 ppm to about 40000 ppm.
Clause 8. The method of any one of clauses 1 to 7, wherein the heating is performed for 30 to 300 minutes.
Clause 9. A lithium carbonate prepared through the preparation method described in any one of clauses 1 to 8 and having a plate shape.
Clause 10. The lithium carbonate of clause 9, having:
   a first width in a horizontal direction defined by a first direction and a second direction crossing each other; and
   a second width in a vertical direction defined by a third direction crossing the first direction and the second direction,
   wherein the first width is greater than the second width.
Clause 11. The lithium carbonate of clause 10, wherein the first width ranges from about 3.5 µm to about 15 µm.
Clause 12. The lithium carbonate of clause 10 or clause 11, wherein the second width ranges from about 0.05 µm to about 3 µm.
Clause 13. The lithium carbonate of any one of clauses 9 to 12, having an aspect ratio of about 10 to about 100.
Clause 14. The lithium carbonate of any one of clauses 9 to 13, having a purity of about 95% to about 99.999%.
Clause 15. The lithium carbonate of any one of clauses 9 to 14, wherein in an XRD spectrum using a Cu-Kα line for the lithium carbonate, a ratio of a maximum intensity of a (002) plane to a maximum intensity of a (110) plane ranges from about 1.1 to about 2.
Clause 16. The lithium carbonate of any one of clauses 9 to 15, wherein in an XRD spectrum using a Cu-Kα line for the lithium carbonate, a full width at half maximum of a peak corresponding to the (110) plane ranges from about 0.0300 degrees to about 0.0500 degrees.
Clause 17. The lithium carbonate of any one of clauses 9 to 16, wherein in an XRD spectrum using a Cu-Kα line for the lithium carbonate, a full width at half maximum of a peak corresponding to the (002) plane ranges from about 0.100 degrees to about 0.177 degrees.
Clause 18. A rechargeable lithium battery comprising a positive electrode active material prepared by mixing and heat treating the lithium carbonate described in any one of clauses 9 to 17 and a transition metal-containing compound.
Clause 19. The rechargeable lithium battery of clause 18, wherein the positive electrode active material comprises a lithium nickel-based composite oxide having a nickel (Ni) content of about 50 mol% to about 100 mol% among metals excluding lithium.
Clause 20. The rechargeable lithium battery of clause 18 or clause 19, having a capacity retention of at least 90% when charged and discharged 30 times at 1 C/1 C at 45 °C.

## Claims

1. A method for preparing a lithium carbonate, the method comprising:
mixing a lithium nickel-based composite oxide and a coating solution to form a first mixture, wherein the coating solution includes a coating raw material, a precipitant, and a solvent;
filtering the first mixture to recover a washing solution containing at least 1000 ppm of lithium;
filtering the washing solution;
mixing and heating the filtered washing solution and sodium carbonate to form a second mixture; and
filtering, washing, and drying the second mixture,
wherein the heating is performed at a temperature of about 50 °C to about 80 °C.

2. The method of claim 1, wherein the lithium nickel-based composite oxide has a nickel (Ni) content of about 80 mol% to about 100 mol% among metals excluding lithium.

3. The method of claim 1 or claim 2, wherein the coating raw material is a cobalt compound.

4. The method of claim 3, wherein the cobalt compound comprises at least one selected from the group consisting of cobalt nitrate, cobalt sulfate, cobalt oxide, cobalt hydroxide, and cobalt carbonate.

5. The method of any one of claims 1 to 4, wherein the precipitant comprises at least one selected from the group consisting of sodium hydroxide, lithium hydroxide, potassium hydroxide, and ammonia.

6. The method of any one of claims 1 to 5, wherein the washing solution comprises about 3500 ppm to about 5000 ppm of lithium.

7. The method of any one of claims 1 to 6, wherein the washing solution contains impurities at a concentration of about 20 ppm to about 40000 ppm.

8. The method of any one of claims 1 to 7, wherein the heating is performed for 30 to 300 minutes.

9. A lithium carbonate prepared through the preparation method described in any one of claims 1 to 8 and having a plate shape.

10. The lithium carbonate of claim 9, having:
a first width in a horizontal direction defined by a first direction and a second direction crossing each other; and
a second width in a vertical direction defined by a third direction crossing the first direction and the second direction,
wherein the first width is greater than the second width.

11. The lithium carbonate of claim 10, wherein the first width ranges from about 3.5 µm to about 15 µm.

12. The lithium carbonate of claim 10 or claim 11, wherein the second width ranges from about 0.05 µm to about 3 µm.

13. The lithium carbonate of any one of claims 9 to 12, having an aspect ratio of about 10 to about 100.

14. The lithium carbonate of any one of claims 9 to 13, having a purity of about 95% to about 99.999%.

15. The lithium carbonate of any one of claims 9 to 14, wherein in an XRD spectrum using a Cu-Kα line for the lithium carbonate, a ratio of a maximum intensity of a (002) plane to a maximum intensity of a (110) plane ranges from about 1.1 to about 2.
